# EUROPEAN PATENT APPLICATION

(11) **EP 2 626 776 A2**
(43) Date of publication of application: **14.08.2013**
(21) Application number: 12196106.4
(22) Date of filing: 07.12.2012
(51) Int. Cl.: G06F 3/0488, G06F 21/36, H04M 1/67

(54) **Electronic device and screen lock method**

(30) Priority: 10.02.2012 TW 101104291
(71) Applicant: Acer Incorporated, Taipei Hsien 221 (TW)
(72) Inventor: Chiu, Sheng-Feng, 221 Taipei Hsien (TW)
(74) Representative: Michalski Hüttermann & Partner Patentanwälte

(57) **Abstract**

An electronic device is provided, including a touch unit and an application processing unit. The touch unit has a sensing area arranged to display first and second screen views in a normal operation mode and a first screen lock mode, respectively, and detects a touch location in the sensing area to generate a detection signal. The application processing unit determines the predetermined area according to a setting signal and removes the predetermined area of the second screen view to generate a modified second screen view in the normal operation mode, such that the first screen view in the predetermined area is not covered by the modified second screen view in a second screen lock mode, and a first application operation corresponding to the touch location in the first screen view is performed, when the touch location is located in the predetermined area in the second screen lock mode.

## Description

### CROSS REFERENCE TO RELATED APPLICATIONS

This Application claims priority of Taiwan Patent Application No. 101104291, filed on February 10, 2012, the entirety of which is incorporated by reference herein.

### BACKGROUND OF THE INVENTION

### Field of the Invention

The present invention relates to electronic devices, and in particular to electronic devices having a touch screen.

### Description of the Related Art

A variety of electronic devices, like portable and hand-held devices such as mobile phones, smartphones, PDAs and tablet PCs, have recently become more functional and advanced. Such electronic devices have become one of the necessities of modem life because these electronic devices bring convenience.

Some of these portable and hand-held devices (such as smart phones, PDAs, tablet PCs, UMPCs, or Ultra Mobile PCs) are configured with a touch screen capable of being directly touched to serve as a main input device. Users of the hand-held devices deliver orders by touching the buttons on the screen to perform or control the functions. For example, users can tap a drafting button or icon on the display device to enable a drafting function, or tap a navigation button or icon on the display device to enable a satellite navigation function.

For avoiding careless touches on the touch screen of the electronic devices, the user may turn off the screen or enter the lock screen state. However, when the electric device is performing some common application programs (i.e. playing music) in the lock screen state, the user needs to unlock the screen state prior to performing some other functions (i.e. changing songs or fast-forwarding), and thus, it is very inconvenient. Hence, an electronic device and a screen lock method to overcome the above issues are needed.

### BRIEF SUMMARY OF THE INVENTION

The invention provides a screen lock method. In one embodiment, the screen lock method is suitable for an electronic device having a sensing area. The electronic device comprises a normal operation mode and a first screen lock mode for displaying a first screen view and a second screen view which covers the first screen view, respectively. Firstly, a predetermined area in the sensing area is determined according to a setting signal generated by a track and/or a button, when the electronic device operates in the normal operation mode. In the second lock screen mode, the predetermined area is removed from an area of the second screen view to generate a modified second screen view, such that the first screen view in the predetermined area is not covered by the modified second screen view. A touch location in the sensing area is detected to generate a detection signal in the second screen lock mode. Whether the touch location is located in the predetermined area is determined according to the detection signal. A first application operation corresponding to the touch location located in the first screen view is performed by an application processing unit of the electronic device according to the detection signal, when the touch location is located in the predetermined area.

The invention also provides an electronic device. In one embodiment, the electronic device comprises a touch unit, a storage unit, and an application processing unit. The touch unit has a sensing area to display a first screen view and a second screen view which covers the first screen view, in a normal operation mode and a first screen lock mode, respectively, and detects a touch location in the sensing area to generate a detection signal. The storage unit stores at least one predetermined area of the sensing area. The application processing unit, in the normal operation mode, determines the predetermined area according to a setting signal which is generated by a track and/or a button and removes the predetermined area from an area of the second screen view to generate a modified second screen view, such that the first screen view in the predetermined area is not covered by the modified second screen view in the second screen lock mode. In the second screen lock mode, the application processing unit determines whether the touch location is located in the predetermined area according to the sensing signal, and performs a first application operation corresponding to the touch location in the first screen view, when the touch location is located in the predetermined area.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

FIG. 1A is a schematic view showing an electronic device of the invention;

FIG. 1B is another schematic view showing the electronic device of the invention;

FIG. 2 is another schematic view showing the electronic device of the invention;

FIG. 3 is another schematic view showing the electronic device of the invention;

FIG. 4 is a flowchart of the screen lock method of the invention; and

FIG. 5 is another flowchart of the screen lock method of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

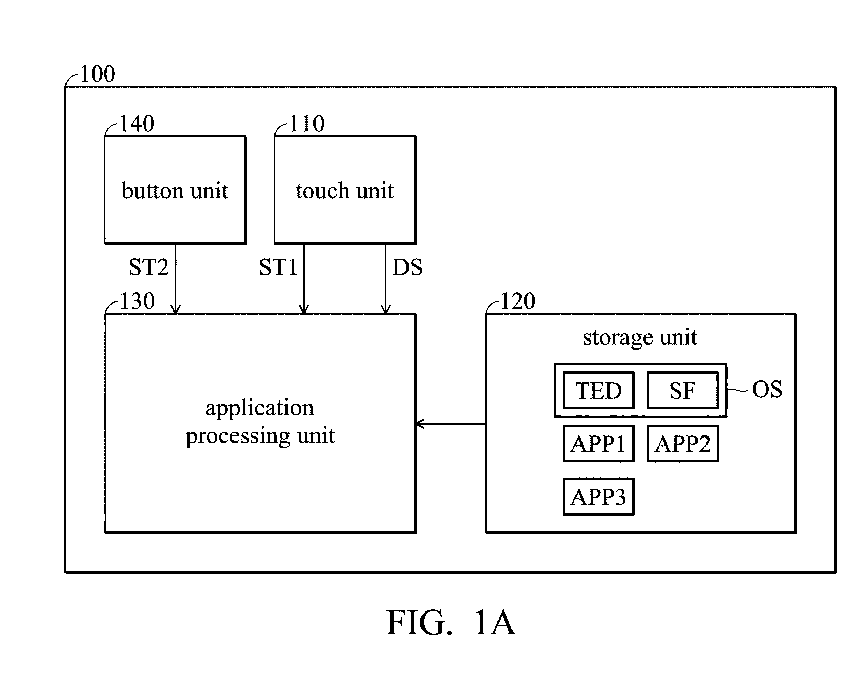

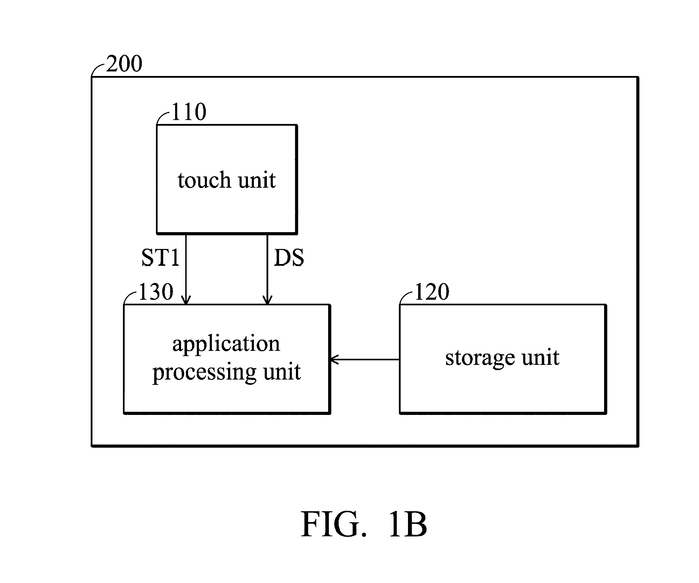

FIG. 1A shows an embodiment of an electronic device of the invention. As shown in FIG. 1, the electronic device 100 comprises a touch unit 110, a storage unit 120, an application processing unit 130, and a button unit 140. The electronic device 100 has a normal operation mode and first and second screen lock modes. The application processing unit 130 normally receives and responds to signals from the touch unit 110, the storage unit 120, or the button unit 140, when the electronic device 100 operates in the normal operation mode. The application processing unit 130 stops receiving and responding to signals from the touch unit 110 to prevent the electronic device 100 from performing actions based on signals received in error by the touch unit 110, when the electronic device 100 operates in the first screen lock mode (i.e., a default screen lock mode). The application processing unit 130 selectively stops receiving and responding to signals from the touch unit 110 when the electronic device 100 operates in the second screen lock mode.

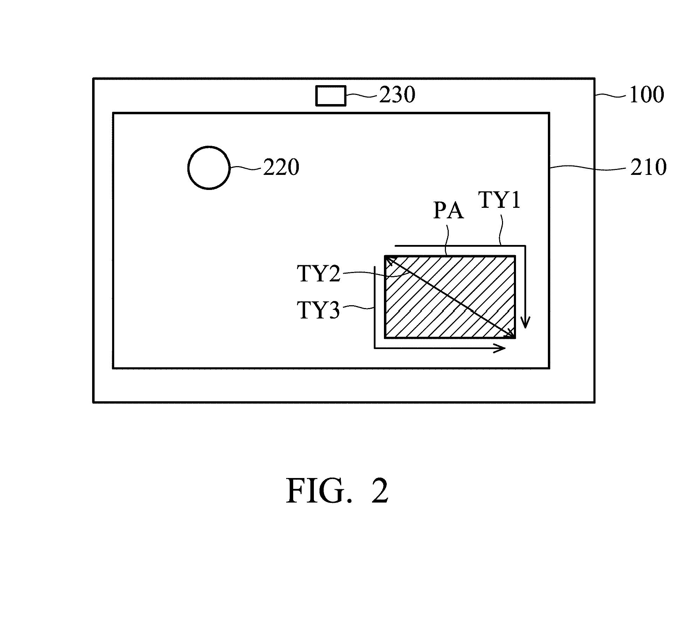

Specifically, the touch unit 110 has a sensing area to display a first screen view in the normal operation mode and a second screen view which covers the first screen view in the first screen lock mode, and detects a touch location located in the sensing area to generate a detection signal DS. For example, the sensing area can be the sensing area 210 shown in FIG. 2 and is deposited on the shell surface of the electronic device 100. The first screen view has at least one link or widget corresponding to application operation(s), and the electronic device 100 performs the application operation or the widget according to the output signal from the touch unit 110 or the button unit 140 in normal operation mode. Furthermore, in the normal operation mode, the application processing unit 130 determines a predetermined area according to a setting signal generated by a track and/or a virtual button and/or a physical button (i.e. power key or camera key) of the button unit 140, and stores the predetermined area to the storage unit 120. The application processing unit 130 removes the predetermined area from an area of the second screen view to generate a modified second screen view, such that the first screen view in the predetermined area is not covered by the modified second screen view in the second screen lock mode. The electronic device 100 switches from the normal operation mode to the first screen lock mode or the second screen lock mode, according to idle time or a hot key signal.

The application processing unit 130 determines whether the touch location is located in the predetermined area according to the detection signal DS in the second screen lock mode. The application processing unit 130 performs a first application operation corresponding to the touch location in the first screen view when the touch location is located in the predetermined area. The application processing unit 130 ignores the detection signal DS when the touch location is outside the predetermined area.

The first application operation APP1 is a widget or an application such as a clock, calendar, video player, or Global Positioning System (GPS). The storage unit 120 stores the operation system (OS), the predetermined area, and the first, second and third application operations (APP1∼APP3). The first and second screen views can also be application operations. The aforementioned quantity of application operations is only for explanation, and is not limited thereto.

Those skilled in the art will understand that some embodiments may be practiced with other electronic system configurations, including hand-held devices, personal digital assistants (PDAs), multiprocessor-based, microprocessor-based or programmable consumer electronics, network PCs, minicomputers, mainframe computers, and the like.

The processing unit 130 comprises a single central processing unit (CPU), a micro processing unit (MPU), or multiple processing units, commonly referred to as a parallel processing environment used for executing a screen lock method. The storage unit 120 includes a read only memory (ROM), a flash ROM, a random access memory (RAM), an erasable programmable read-only memory, an electronic erasable programmable read-only memory, a register, a hard disk, and/or any other type of computer-readable storage media to store program modules executed by the application processing unit 130. Generally, program modules include routines, programs, objects, components, etc. used for executing the function of compressing messages. Some embodiments may also be practiced in distributed computing environments where tasks are performed by remote processing devices linked through a communication network. In a distributed computing environment, program modules may be located in both local and remote memory storage devices based on various remote access architectures.

FIG. 1B is another schematic view of the electronic device of this disclosure. As shown in FIG. 1B, the electronic device 200 is similar to the electronic device 100. However, the difference between them is that the electronic device 200 comprises the touching unit 110, the storage unit 120, and the application processing unit 130 without a button unit 140, and the features of the touching unit 100, the storage unit 120, and the application processing unit 130 are similar to those shown in FIG. 1A, and thus, details thereof are omitted for brevity.

FIG. 2 is another schematic view of the electronic device of this disclosure. As shown in FIGs. 1A, 1B, and 2, in the normal operation mode, the application processing unit 130 performs the second application operation (APP2) stored in the storage unit 120, such that the application processing unit 130 determines the location and size of the predetermined area PA according to a setting signal ST1 or ST2 generated by a track TY1, TY2 or TY3 of the sensing area 210 or a virtual button 220 and/or a physical button (i.e. power key). It should be noted that the tracks TY1, TY2, and TY3 are for explanation, but actually the area surrounded by the track may be an irregular shape.

Generally, the application processing unit 130 ignores the detection signal DS coming from the sensing area 210 directly when the electronic device 100 operates in the default screen lock mode (i.e. the first screen lock mode). However, after the predetermined area is decided, the application processing unit 130 adjusts the touch event dispatcher (TED) and the display control mode (i.e. surface finger; SF) in the operation system according to the second application operation (APP2). In other words, the application processing unit 130 separates the predetermined area from the second screen view (Because the area of the second screen view is the same as the sensing area 210, it is not drawn out) to generate the modified second screen view, and the application processing unit 130 enters the second screen lock mode from the predetermined first screen lock mode. Hence, the application processing unit 130 still performs the application operation corresponding to the first screen view according to the detection signal DS, when the electronic device 100 operates in a screen lock mode (i.e. the second screen lock mode) and the touch location is located in the predetermined area PA.

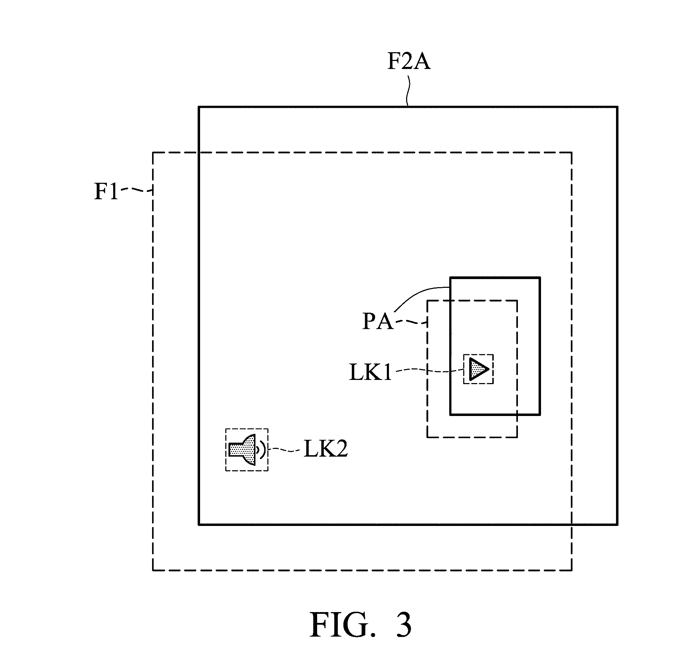

FIG. 3 is another schematic view of the electronic device of this disclosure. As shown in FIG. 1A to FIG. 3, the first screen view F1 and the modified second screen view F2A are the screen views of the sensing area 210 when the electronic device 100 operates in the normal operation mode and the second screen lock mode respectively, wherein the first screen view F1 has links LK1 and LK2. It should be noted that the electronic device 100 actually only shows the first screen view F1 when the electronic device 100 operates in normal operation mode. When the electronic device 100 switches to the screen lock mode (i.e. the first screen lock mode) from the normal operation mode, the electronic device 100 generates the second screen view F2 to cover the first screen view F1 completely. However, a part (i.e., image), which is in the predetermined area PA, of the first screen view is exposed rather than being covered by the modified second screen view F2A when the electronic device 100 switches to the screen lock mode (i.e. the second screen lock mode) from the normal operation mode. As shown in FIG. 3, for convenient explanation, the first screen view F1 and the second screen view F2 do not cover each other completely.

When the electronic device 100 operates in the normal operation mode, the application processing unit 130 performs the application operation (i.e. the application operation APP3) corresponding to the touch location in the first screen view F1 according to a first rule (default rule) of the operation system. When the electronic device 100 operates in the screen lock mode (i.e. the first screen lock mode), the application processing unit 130 does not perform the application operation corresponding to the touch location in the first screen view F1 according to the first rule of the operation system but performs the application operation corresponding to the touch location in the second screen view F2. However, the application operation corresponding to the second screen view F2 is "ignoring detection signal DS", therefore the electronic device 100 does not respond to the detection signal DS generated by the touch unit 100.

However, if the application operation APP2 is already performed and the predetermined area PA is generated by the application processing unit 130 (i.e., in the normal operation mode) before the electronic device 100 enters the screen lock mode, the application processing unit 130 performs the first application operation corresponding to the touch location in the first screen view F1 according to the detection signal DS. For example, if the application processing unit 130 changes the first rule to a second rule of the operation system OS according to the application operation APP2 before the electronic device 100 enters the screen lock mode, the application processing unit 130 does not ignore the detection signal DS and performs the first application operation (i.e. an MP3 broadcasting operation corresponding to the link LK1) corresponding to the touch location in the first screen view F1 according to the detection signal DS, when the electronic device 100 enters the screen lock mode from the normal operation mode and the touch location (i.e. the link LK1 in FIG. 3) is inside the predetermined area PA. Conversely, when the touch location (i.e. the link LK2 in FIG. 3) is outside the predetermined area PA, the application processing unit 130 ignores the detection signal DS and does not perform the application operation corresponding to the link LK2.

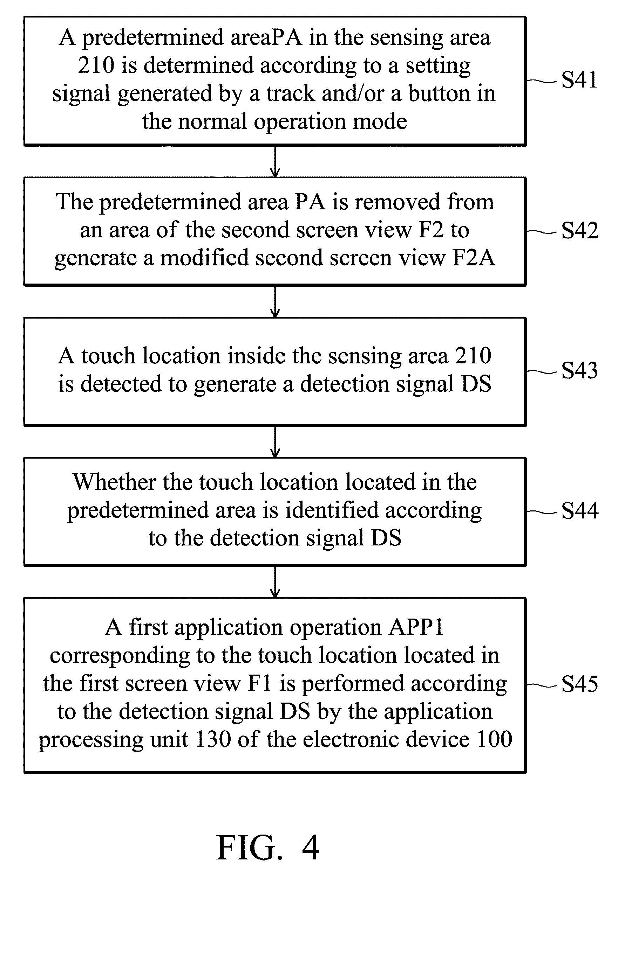

FIG. 4 is a flowchart of the screen lock method of this disclosure. As shown in FIG. 4, the screen lock method comprises the steps below.

In step S41, a predetermined area PA in the sensing area 210 is determined according to the setting signal generated by the track and/or the button in the normal operation mode. In step S42, the predetermined area PA is removed from an area of the second screen view F2 to generate a modified second screen view F2A, such that the first screen view F1 in the predetermined area PA is not covered by the modified second screen view F2A in the second screen lock mode. Then step S43 is executed in the second screen lock mode to detect the touch location inside the sensing area 210 to generate the detection signal DS. In step S44, whether the touch location is located in the predetermined area PA is determined according to the detection signal DS. When the touch location is located in the predetermined area PA, the method proceeds to step S45. In step S45, a first application operation APP1 corresponding to the touch location located in the first screen view F1 is performed according to the detection signal DS by the application processing unit 130 of the electronic device 100. It should be noted that the application processing unit 130 directly ignores the detection signal DS generated by the touch unit 110 in the first screen lock mode, without determining whether the touch location is located in the predetermined area PA.

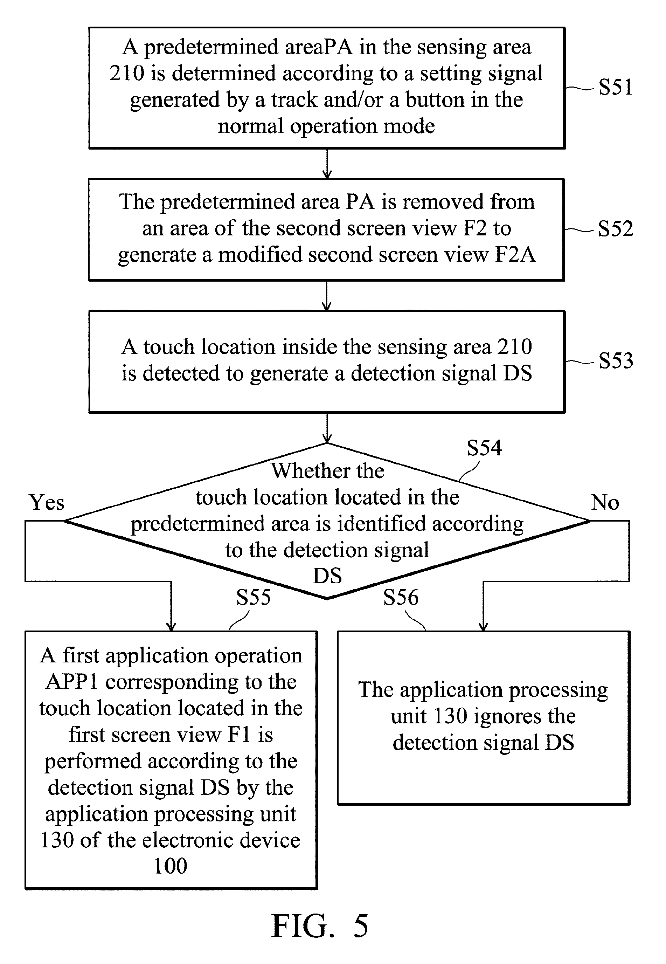

FIG. 5 is another flowchart of the screen lock method of this disclosure. As shown in FIG. 5, steps S41∼S45 are similar to steps S51∼S55. The only difference between them is that step S56 is executed when the touch location is outside the predetermined area 210, such that the application processing unit 130 ignores the detection signal DS. Therefore, the screen lock method of this disclosure still locks the partial screen.

Generally speaking, the user needs to unlock the screen lock to select songs or switch channels, when the user is listening to music or radio in the screen lock mode. However, the method of this disclosure can select songs or switch channels directly in the screen lock mode, and thus this disclosure of the screen lock method is very convenient. In addition, the common electronic device covers the lock screen view (i.e. the second screen view F2) with another screen view (i.e. the third screen view F3 and it is not drawn out) such that the user selects songs or switches channels by the third screen view F3 in the lock screen mode. However, the third screen view F3 increases design complexity and power consumption. Above all, this disclosure of the screen lock method and the electronic devices 100 and 200 perform the partial lock screen rather than the common screen lock mode (i.e. the entire screen view area is locked). Therefore, the user can perform the application operation quickly without unlocking the screen lock, such that the extra power consumption of the electronic devices 100 and 200 is not increased.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A screen lock method, suitable for an electronic device having a sensing area, the electronic device comprising a normal operation mode and a first screen lock mode for displaying a first screen view and a second screen view which covers the first screen view, respectively, the screen lock method comprising:
determining a predetermined area in the sensing area according to a setting signal generated by a track and/or a button, when the electronic device operates in the normal operation mode;
removing the predetermined area from an area of the second screen view to generate a modified second screen view, such that the first screen view in the predetermined area is not covered by the modified second screen view in a second lock screen mode;
detecting a touch location in the sensing area to generate a detection signal in the second screen lock mode;
determining whether the touch location is located in the predetermined area according to the detection signal; and
performing a first application operation corresponding to the touch location located in the first screen view by an application processing unit of the electronic device according to the detection signal, when the touch location is located in the predetermined area.

2. The screen lock method as claimed in claim 1, wherein the button comprises a virtual button or a physical button.

3. The screen lock method as claimed in claim 1, further comprising:
ignoring the detection signal when the touch location is outside the predetermined area.

4. The screen lock method as claimed in claim 1, wherein the application processing unit directly ignores the detection signal generated by a touch unit in the first screen lock mode.

5. The screen lock method as claimed in claim 1, wherein the first screen view is displayed in the predetermined area in the second screen lock mode.

6. The screen lock method as claimed in claim 1, wherein the first application operation is a widget or an application.

7. An electronic device, comprising:
a touch unit, having a sensing area to display a first screen view and a second screen view which covers the first screen view, in a normal operation mode and a first screen lock mode, respectively, and detecting a touch location in the sensing area to generate a detection signal;
a storage unit, storing at least one predetermined area of the sensing area; and
an application processing unit, in the normal operation mode determining the predetermined area according to a setting signal which is generated by a track and/or a button and removing the predetermined area from an area of the second screen view to generate a modified second screen view, such that the first screen view in the predetermined area is not covered by the modified second screen view in the second screen lock mode, wherein, in the second screen lock mode, the application processing unit determines whether the touch location is located in the predetermined area according to the sensing signal, and performs a first application operation corresponding to the touch location in the first screen view, when the touch location is located in the predetermined area.

8. The electronic device as claimed in claim 7, wherein the button comprises a virtual button or a physical button.

9. The electronic device as claimed in claim 7, wherein the application processing unit directly ignores the detection signal generated by the touch unit in the first screen lock mode.

10. The electronic device as claimed in claim 7, wherein the application processing unit ignores the detection signal when the touch location is outside the predetermined area.

11. The electronic device as claimed in claim 7, wherein, in the second screen lock mode, the predetermined area in the sensing area displays an image which is a part of the first screen view shown in the predetermined area.

12. The electronic device as claimed in claim 7, wherein the first application operation is a widget or an application.
